# EUROPÄISCHE PATENTSCHRIFT

(11) **EP 1 504 955 B1**
(45) Veröffentlichungstag und Bekanntmachung des Hinweises auf die Patenterteilung: **27.10.2010**
(21) Anmeldenummer: 04018214.9
(22) Anmeldetag: 31.07.2004
(51) Int. Cl.: B60Q 1/04

(54) **Vorrichtung zur Positionierung zweier Verkleidungsteile, insbesondere eines Scheinwerfers und eines Stossfängers, an einer Kraftfahrzeugkarosserie**
System to locate two cover elements, in particular for a headlamp and a bumper, to a body of a vehicle
Assemblage pour positionner deux éléments d'habillage, en particulier pour un projecteur et un pare-chocs, à la carrosserie

(30) Priorität: 08.08.2003 DE 10336362
(43) Veröffentlichungstag der Anmeldung: 09.02.2005
(73) Patentinhaber: GM Global Technology Operations, Inc., Detroit, MI 48265-3000 (US)
(72) Erfinder: Feid, Thomas, 68239 Mannheim (DE); Gottwald, Wolfgang, 23600 Martos (Jaen) (ES); Kathmann, Jörg, 64569 Nauheim (DE); Kistinger, Thomas, 64347 Griesheim (DE); Krieg, Gregor, 63303 Dreieich (DE); Reichmann, Karl-Heinz, 64589 Stockstadt (DE); Schneider, Ingolf, 65428 Rüsselsheim (DE)
(74) Vertreter: Daniel, Ulrich W.P.

(56) Entgegenhaltungen:
- WO-A-03/076229
- DE-A1- 19 946 995

## Beschreibung

### Beschreibung für folgende(n) Vertragsstaat(en) : DE, FR, GB

Die Erfindung bezieht sich auf eine Vorrichtung nach dem Oberbegriff des Patentanspruchs 1.

Üblicherweise werden Scheinwerfer und Stoßfänger an der Fahrzeug-Karosseriestruktur einzeln befestigt. Da ein Toleranzausgleich für Scheinwerfer und Stoßfänger nicht vorhanden ist, ergibt sich das Problem eines nicht prozesssicheren Fugenverlaufs zwischen Scheinwerfer und Stoßfänger und ein hieraus resultierendes ungleichmäßiges Erscheinungsbild der Frontpartie des Fahrzeugs.

Die Problematik ist bekannt, und es wurden auch bereits Versuche zu ihrer Lösung unternommen. So zeigt beispielsweise die DE 44 42 294 C1 eine Vorrichtung zur Positionierung eines Gehäuses einer Fahrzeugleuchte bzw. eines Fahrzeugscheinwerfers, bei der das Gehäuse über Haltemittel in einem Verkleidungsteil, beispielsweise einem Stoßfänger, positionierbar ist. Nachteilig dabei ist, dass das Gehäuse von hinten an dem Stoßfänger montiert werden muss, um dann mit dem Stoßfänger zusammen an der Karosserie befestigt zu werden.

Durch die DE 198 35 048 A1 ist es bekannt, die Positionierung eines in einer Karosserieöffnung befestigbaren Scheinwerfers gegenüber einer den Scheinwerfer umgebenden Verkleidung dadurch vorzunehmen, dass das Gehäuse einen Zentrieransatz aufweist, der von einer Aussparung des Fahrzeugs zentrierend umgriffen wird. Der Nachteil ist hier in der Notwendigkeit einer relativ aufwendigen Gestaltung des Zentrieransatzes zu sehen. Z. B. besitzt der bekannte Zentrieransatz zwei in einem Abstand gegenüberliegende Führungsflächen, die in Abstrahlrichtung des Scheinwerfers konisch aufeinander zulaufend ausgebildet sein müssen, und weist darüber hinaus eine die Streuscheibe positionierende Zentriernut auf, in die die Streuscheibe mit einem Ansatz eingreift.

Aus der WO 03/076229 A1 ist eine Vorrichtung gemäß dem Oberbegriff des Patentanspruchs 1 bekannt. Dieses Dokument fällt unter Artikel 54(3) EPÜ.

Ausgehend von dem geschilderten Stand der Technik besteht die Aufgabe der vorliegenden Erfindung darin, mit einfachen und kostengünstigen Mitteln einen prozesssicheren Fugenverlauf bei der Positionierung zweier Verkleidungsteile an einem Fahrzeug relativ zueinander zu erreichen.

Gemäß der Erfindung wird die Aufgabe bei einer Vorrichtung der eingangs bezeichneten Art durch die kennzeichnenden Merkmale des Patentanspruchs 1 gelöst.

Vorteilhafte Weiterbildungen des Grundgedankens der Erfindung können den abhängigen Patentansprüchen entnommen werden.

Durch die erfindungsgemäße Erweiterung an dem Verbindungselement des ersten Verkleidungsteils, insbesondere eines Scheinwerfergehäuses, wird der Vorteil erreicht, dass sich der Befestigungspunkt des zweiten Verkleidungsteils, insbesondere eines Stoßfängers, an dem (benachbarten) Befestigungspunkt des ersten Verkleidungsteils in allen drei Koordinatenrichtungen ausrichten kann. Daraus ergibt sich ein gleichmäßiger Fugenverlauf zwischen den beiden Verkleidungsteilen und insgesamt ein harmonisches Erscheinungsbild derselben, insbesondere von Schweinwerfern und Stoßfänger an der Frontpartie eines Kraftfahrzeugs.

Die Erfindung ist in der Zeichnung anhand von Ausführungsbeispielen veranschaulicht, die nachstehend näher beschrieben werden. Es zeigt:
- Fig. 1: - in perspektivischer Darstellung - eine Ausführungsform einer Befestigung für einen Scheinwerfer und einen Stoß- fänger und
- Fig. 2: einen Schnitt längs der Linie II - II in Fig. 1, in gegenüber Fig. 1 vergrö- ßerter Darstellung.

Es bezeichnet 10 eine Blechkonstruktion, bei der es sich um die Frontpartie einer Kraftfahrzeugkarosserie handeln kann. Mit 11 ist insgesamt ein Scheinwerfer beziffert, der ein Gehäuse 12 besitzt. An der Karosserie 11 ist eine Befestigungslasche 13 angeformt bzw. befestigt, die zwei benachbart zueinander angeordnete Befestigungspunkte 14 und 15 aufweist. Der Befestigungspunkt 14 dient zur Befestigung des Scheinwerfergehäuses 12, während der andere Befestigungspunkt 15 zur Fixierung eines Stoßfängers 16 vorgesehen ist. An das als Kunststoff-Spritzteil ausgebildete Scheinwerfergehäuse 12 ist - als Verbindungselement zur Karosserie 10 - ein Verbindungssteg 17 einstückig angeformt.

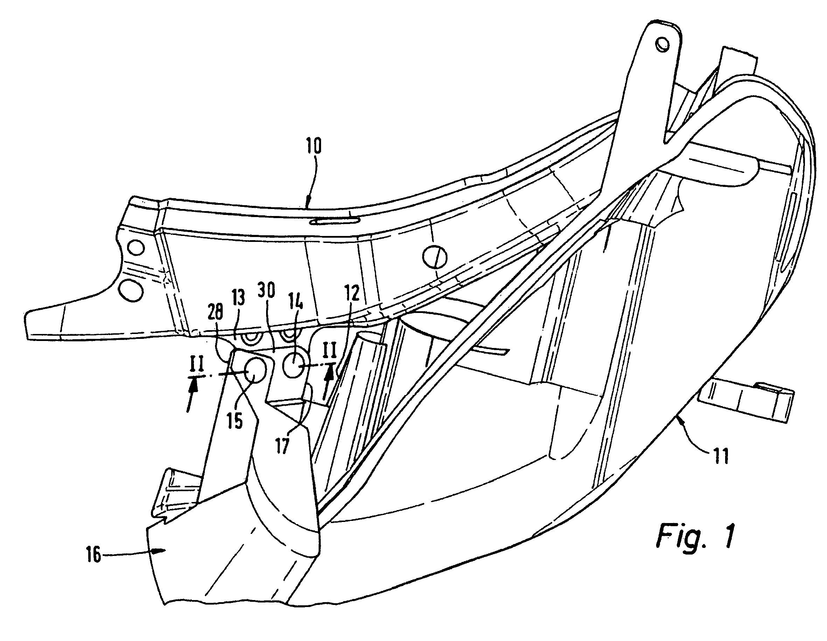

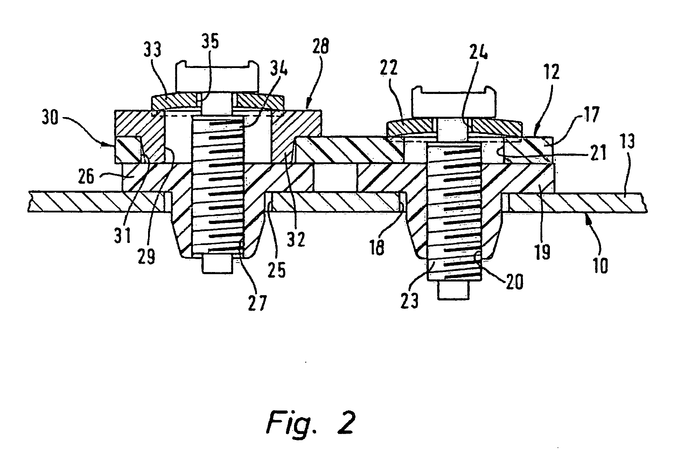

Die Fixierung des Scheinwerfergehäuses 12, und damit des Scheinwerfers 11, an der Karosserie 10 geht im Einzelnen aus Fig. 2 hervor. Hierzu ist in eine - dem Befestigungspunkt 14 (s. Fig. 1) entsprechende - Karosserieausnehmung 18 ein dübelartiger Kunststoffclip 19 eingesetzt, der eine Bohrung 20 aufweist. In die Bohrung 20 ist eine Befestigungsschraube 23 eingeschraubt, wobei deren Gewinde sich in die Wandung der Bohrung 20 eindrückt bzw. - schneidet und hierbei gleichzeitig den Clip 19 auseinanderdrückt, so dass dieser - dübelartig - in der Karosserieausnehmung 18 fixiert wird. Die Befestigungsschraube 23 durchsetzt eine Langlochbohrung 21 im Verbindungssteg 17. Auf dem Verbindungssteg 17 - hierbei die Bohrung 21 abdeckend - sitzt eine elastische Haltescheibe 22, die eine ebenfalls von der Befestigungsschraube 23 durchsetzte Bohrung 24 aufweist.

In ähnlicher Weise erfolgt auch die Fixierung des Stoßfängers 16 an der Karosserie 10: Diese besitzt eine dem Befestigungspunkt 15 entsprechende Ausnehmung 25, in die ein Kunststoffclip 26 eingesetzt ist. In eine durchgehende Bohrung 27 des Clips 26 ist eine Befestigungsschraube 34 eingeschraubt, die hierdurch, wie oben beschrieben, den Clip 26 dübelartig in der Karosserieausnehmung 25 fixiert.

Zur Herstellung der Verbindung Stoßfänger 16/Karosserie 10 ist ein an den - als Kunststoff-Spritzteil ausgebildeten - Stoßfänger 16 einstückig angeformtes stegförmiges Verbindungselement 28 mit einer - dem Ausgleich von Fertigungstoleranzen dienenden - Langlochbohrung 29 vorgesehen. Entsprechend dient auch die Langlochbohrung 21 im Verbindungselement 12 dem Ausgleich von Fertigungstoleranzen.

Eine wesentliche Besonderheit besteht nun im Folgendem: An das stegförmige Verbindungselement 17 des Scheinwerfergehäuses 12 ist eine seitliche Erweiterung 30 angeformt, die mit ihren Konturen den Befestigungspunkt 15 (s. Fig. 1) abdeckt (s. auch Karosserieausnehmung 25 in Fig. 2). Die Erweiterung 30 besitzt eine Durchgangsbohrung 31 vergleichsweise großen Durchmessers, in die ein an das Verbindungselement 28 des Stoßfängers 16 angeformter leicht konischer Fortsatz 32 eingreift. Die Konizität des Fortsatzes 32 fungiert als Einführhilfe in die Bohrung 31. Die Langlochbohrung 29 des Verbindungselements 28 wird nach außen durch eine elastische Haltescheibe 33 abgedeckt. Die Haltescheibe 33 weist eine von der Befestigungsschraube 34 durchsetzte Bohrung 35 auf. Durch die dem Scheinwerfer-Befestigungspunkt 14 zugeordnete, an das Verbindungselement 17 angespritzte Erweiterung 30 kann sich der Stoßfängerbefestigungspunkt 15 in allen drei Koordinatenrichtungen (XYZ) ausrichten.

### Bezugszeichenliste

- 10: Karosserie
- 11: Scheinwerfer
- 12: Scheinwerfergehäuse
- 13: Befestigungslasche
- 14: Befestigungspunkt
- 15: Befestigungspunkt
- 16: Stoßfänger
- 17: Verbindungselement (Verbindungssteg)
- 18: Karosserieausnehmung
- 19: Kunststoffclip
- 20: Bohrung
- 21: Langlochbohrung
- 22: Haltescheibe
- 23: Befestigungsschraube
- 24: Bohrung
- 25: Ausnehmung
- 26: Kunststoffclip
- 27: Bohrung
- 28: Verbindungselement (Verbindungssteg)
- 29: Langlochbohrung
- 30: Erweiterung
- 31: Durchgangsbohrung
- 32: Fortsatz
- 33: Haltescheibe
- 34: Befestigungsschraube
- 35: Bohrung

### Beschreibung für folgende(n) Vertragsstaat(en) : AT, BE, BG, CH, CY, CZ, DK, EE, ES, FI, GR, HU, IE, IT, LI, LU, MC, NL, PL, PT, RO, SE, SI, SK, TR

Die Erfindung bezieht sich auf eine Vorrichtung nach dem Oberbegriff des Patentanspruchs 1.

Üblicherweise werden Scheinwerfer und Stoßfänger an der Fahrzeug-Karosseriestruktur einzeln befestigt. Da ein Toleranzausgleich für Scheinwerfer und Stoßfänger nicht vorhanden ist, ergibt sich das Problem eines nicht prozesssicheren Fugenverlaufs zwischen Scheinwerfer und Stoßfänger und ein hieraus resultierendes ungleichmäßiges Erscheinungsbild der Frontpartie des Fahrzeugs.

Die Problematik ist bekannt, und es wurden auch bereits Versuche zu ihrer Lösung unternommen. So zeigt beispielsweise die DE 44 42 294 C1 eine Vorrichtung zur Positionierung eines Gehäuses einer Fahrzeugleuchte bzw. eines Fahrzeugscheinwerfers, bei der das Gehäuse über Haltemittel in einem Verkleidungsteil, beispielsweise einem Stoßfänger, positionierbar ist. Nachteilig dabei ist, dass das Gehäuse von hinten an dem Stoßfänger montiert werden muss, um dann mit dem Stoßfänger zusammen an der Karosserie befestigt zu werden.

Durch die DE 198 35 048 A1 ist es gemäß Oberbegriff des Anspruchs 1 bekannt, die Positionierung eines in einer Karosserieöffnung befestigbaren Scheinwerfers gegenüber einer den Scheinwerfer umgebenden Verkleidung dadurch vorzunehmen, dass das Gehäuse einen Zentrieransatz aufweist, der von einer Aussparung des Fahrzeugs zentrierend umgriffen wird. Der Nachteil ist hier in der Notwendigkeit einer relativ aufwendigen Gestaltung des Zentrieransatzes zu sehen. Z. B. besitzt der bekannte Zentrieransatz zwei in einem Abstand gegenüberliegende Führungsflächen, die in Abstrahlrichtung des Scheinwerfers konisch aufeinander zulaufend ausgebildet sein müssen, und weist darüber hinaus eine die Streuscheibe positionierende Zentriernut auf, in die die Streuscheibe mit einem Ansatz eingreift.

Ausgehend von dem geschilderten Stand der Technik besteht die Aufgabe der vorliegenden Erfindung darin, mit einfachen und kostengünstigen Mitteln einen prozesssicheren Fugenverlauf bei der Positionierung zweier Verkleidungsteile an einem Fahrzeug relativ zueinander zu erreichen.

Gemäß der Erfindung wird die Aufgabe bei einer Vorrichtung der eingangs bezeichneten Art durch die kennzeichnenden Merkmale des Patentanspruchs 1 gelöst.

Vorteilhafte Weiterbildungen des Grundgedankens der Erfindung können den Patentansprüchen 2 - 6 entnommen werden.

Durch die erfindungsgemäße Erweiterung an dem Verbindungselement des ersten Verkleidungsteils, insbesondere eines Scheinwerfergehäuses, wird der Vorteil erreicht, gemäß Oberbegriff des Anspruchs 1

Durch die erfindungsgemäße Erweiterung an dem Verbindungselement des ersten Verkleidungsteils, insbesondere eines Scheinwerfergehäuses, wird der Vorteil erreicht, dass sich der Befestigungspunkt des zweiten Verkleidungsteils, insbesondere eines Stoßfängers, an dem (benachbarten) Befestigungspunkt des ersten Verkleidungsteils in allen drei Koordinatenrichtungen ausrichten kann. Daraus ergibt sich ein gleichmäßiger Fugenverlauf zwischen den beiden Verkleidungsteilen und insgesamt ein harmonisches Erscheinungsbild derselben, insbesondere von Schweinwerfern und Stoßfänger an der Frontpartie eines Kraftfahrzeugs.

Die Erfindung ist in der Zeichnung anhand von Ausführungsbeispielen veranschaulicht, die nachstehend näher beschrieben werden. Es zeigt:
- Fig. 1: - in perspektivischer Darstellung - eine Ausführungsform einer Befestigung für einen Scheinwerfer und einen Stoß- fänger und
- Fig. 2: einen Schnitt längs der Linie II - II in Fig. 1, in gegenüber Fig. 1 vergrö- ßerter Darstellung.

Es bezeichnet 10 eine Blechkonstruktion, bei der es sich um die Frontpartie einer Kraftfahrzeugkarosserie handeln kann. Mit 11 ist insgesamt ein Scheinwerfer beziffert, der ein Gehäuse 12 besitzt. An der Karosserie 11 ist eine Befestigungslasche 13 angeformt bzw. befestigt, die zwei benachbart zueinander angeordnete Befestigungspunkte 14 und 15 aufweist. Der Befestigungspunkt 14 dient zur Befestigung des Scheinwerfergehäuses 12, während der andere Befestigungspunkt 15 zur Fixierung eines Stoßfängers 16 vorgesehen ist. An das als Kunststoff-Spritzteil ausgebildete Scheinwerfergehäuse 12 ist - als Verbindungselement zur Karosserie 10 - ein Verbindungssteg 17 einstückig angeformt.

Die Fixierung des Scheinwerfergehäuses 12, und damit des Scheinwerfers 11, an der Karosserie 10 geht im Einzelnen aus Fig. 2 hervor. Hierzu ist in eine - dem Befestigungspunkt 14 (s. Fig. 1) entsprechende - Karosserieausnehmung 18 ein dübelartiger Kunststoffclip 19 eingesetzt, der eine Bohrung 20 aufweist. In die Bohrung 20 ist eine Befestigungsschraube 23 eingeschraubt, wobei deren Gewinde sich in die Wandung der Bohrung 20 eindrückt bzw. - schneidet und hierbei gleichzeitig den Clip 19 auseinanderdrückt, so dass dieser - dübelartig - in der Karosserieausnehmung 18 fixiert wird. Die Befestigungsschraube 23 durchsetzt eine Langlochbohrung 21 im Verbindungssteg 17. Auf dem Verbindungssteg 17 - hierbei die Bohrung 21 abdeckend - sitzt eine elastische Haltescheibe 22, die eine ebenfalls von der Befestigungsschraube 23 durchsetzte Bohrung 24 aufweist.

In ähnlicher Weise erfolgt auch die Fixierung des Stoßfängers 16 an der Karosserie 10: Diese besitzt eine dem Befestigungspunkt 15 entsprechende Ausnehmung 25, in die ein Kunststoffclip 26 eingesetzt ist. In eine durchgehende Bohrung 27 des Clips 26 ist eine Befestigungsschraube 34 eingeschraubt, die hierdurch, wie oben beschrieben, den Clip 26 dübelartig in der Karosserieausnehmung 25 fixiert.

Zur Herstellung der Verbindung Stoßfänger 16/Karosserie 10 ist ein an den - als Kunststoff-Spritzteil ausgebildeten - Stoßfänger 16 einstückig angeformtes stegförmiges Verbindungselement 28 mit einer - dem Ausgleich von Fertigungstoleranzen dienenden - Langlochbohrung 29 vorgesehen. Entsprechend dient auch die Langlochbohrung 21 im Verbindungselement 12 dem Ausgleich von Fertigungstoleranzen.

Eine wesentliche Besonderheit besteht nun im Folgendem: An das stegförmige Verbindungselement 17 des Scheinwerfergehäuses 12 ist eine seitliche Erweiterung 30 angeformt, die mit ihren Konturen den Befestigungspunkt 15 (s. Fig. 1) abdeckt (s. auch Karosserieausnehmung 25 in Fig. 2). Die Erweiterung 30 besitzt eine Durchgangsbohrung 31 vergleichsweise großen Durchmessers, in die ein an das Verbindungselement 28 des Stoßfängers 16 angeformter leicht konischer Fortsatz 32 eingreift. Die Konizität des Fortsatzes 32 fungiert als Einführhilfe in die Bohrung 31. Die Langlochbohrung 29 des Verbindungselements 28 wird nach außen durch eine elastische Haltescheibe 33 abgedeckt. Die Haltescheibe 33 weist eine von der Befestigungsschraube 34 durchsetzte Bohrung 35 auf. Durch die dem Scheinwerfer-Befestigungspunkt 14 zugeordnete, an das Verbindungselement 17 angespritzte Erweiterung 30 kann sich der Stoßfängerbefestigungspunkt 15 in allen drei Koordinatenrichtungen (XYZ) ausrichten.

### Bezugszeichenliste

- 10: Karosserie
- 11: Scheinwerfer
- 12: Scheinwerfergehäuse
- 13: Befestigungslasche
- 14: Befestigungspunkt
- 15: Befestigungspunkt
- 16: Stoßfänger
- 17: Verbindungselement (Verbindungssteg)
- 18: Karosserieausnehmung
- 19: Kunststoffclip
- 20: Bohrung
- 21: Langlochbohrung
- 22: Haltescheibe
- 23: Befestigungsschraube
- 24: Bohrung
- 25: Ausnehmung
- 26: Kunststoffclip
- 27: Bohrung
- 28: Verbindungselement (Verbindungssteg)
- 29: Langlochbohrung
- 30: Erweiterung
- 31: Durchgangsbohrung
- 32: Fortsatz
- 33: Haltescheibe
- 34: Befestigungsschraube
- 35: Bohrung

## Patentansprüche (Patentansprüche für folgende(n) Vertragsstaat(en): DE, FR, GB)

1. Vorrichtung zur Positionierung zweier Verkleidungsteile gebildet durch einen Scheinwerfer (11, 12) und einen Stoßfänger (16), relativ zueinander an einer Kraftfahrzeug-Karosserie (10), wobei die Verkleidungsteile (11, 12; 16) als Separatteile an der Fahrzeug-Karosseriestruktur (13) fixierbar sind, derart, dass jeweils eine punktuelle Befestigung (14, 15) vorgesehen ist, wobei ein Befestigungspunkt (14) eines ersten Verkleidungsteils (11, 12) an der Karosserie (10, 13) räumlich benachbart zu einem Befestigungspunkt (15) eines zweiten Verkleidungsteils (16) angeordnet ist, und dass an einem Verbindungselement (17) des ersten Verkleidungsteils (11, 12) eine Erweiterung (30) angeformt ist, die sich in den Bereich des benachbarten Befestigungspunkts (15) des zweiten Verkleidungsteils (16) erstreckt, wobei die Erweiterung (30) eine Durchgangsausnehmung (31) für Befestigungsmittel (28, 32, 34) des zweiten Verkleidungsteils (16) aufweist, wobei ein Verbindungselement (28) des zweiten Verkleidungsteils (16) einen Fortsatz (32) besitzt, der in die Durchgangsausnehmung (31) der Erweiterung (30) am Verbindungselement (17) des ersten Verkleidungsteils (12) eingreift,
**dadurch gekennzeichnet,**
**dass** das Verbindungselement (28) des zweiten Verkleidungsteils (16) ferner eine Langlochbohrung (29) aufweist, die von Befestigungsmitteln (34) durchsetzt ist.

2. Vorrichtung nach Anspruch 1, wobei die beiden Verkleidungsteile (11, 12; 16) jeweils über einen als Verbindungselement dienenden Verbindungssteg (17 bzw. 28) an dem zugeordneten Karosserie-Befestigungspunkt (14 bzw. 15) angreifen, **dadurch gekennzeichnet, dass** die Erweiterung (30) des Verbindungsstegs (17) des ersten Verkleidungsteils (11, 12) die Konturen des Verbindungsstegs (28) des zweiten Verkleidungsteils (16) mit umfasst oder im Wesentlichen mit umfasst.

3. Vorrichtung nach Anspruch 1 oder 2, wobei zumindest das erste Verkleidungsteil (12) als Kunststoff-Spritzteil ausgebildet ist und ein einstückig angespritztes Verbindungselement (17) besitzt, **dadurch gekennzeichnet, dass** die Erweiterung (30) an das Verbindungselement (17) des ersten Verkleidungsteils (12) einstückig angespritzt ist.

4. Vorrichtung nach einem oder mehreren der vorstehenden Ansprüche, wobei das erste Verkleidungsteil ein Scheinwerfer (11) ist, der ein Scheinwerfergehäuse (12) aufweist, und wobei das Verbindungselement (17) des Scheinwerfers (11) an das Scheinwerfergehäuse (12) angeformt ist, **dadurch gekennzeichnet, dass** die Erweiterung (30) an das Verbindungselement (17) des Scheinwerfergehäuses (12) einstückig angeformt ist.

## Patentansprüche (Patentansprüche für folgende(n) Vertragsstaat(en): AT, BE, BG, CH, CY, CZ, DK, EE, ES, FI, GR, HU, IE, IT, LI, LU, MC, NL, PL, PT, RO, SE, SI, SK, TR)

1. Vorrichtung zur Positionierung zweier Verkleidungsteile gebildet durch einen Scheinwerfer (11, 12) und einen Stoßfänger (16), relativ zueinander an einer Kraftfahrzeug-Karosserie (10), wobei die Verkleidungsteile (11, 12; 16) als Separatteile an der Fahrzeug-Karosseriestruktur (13) fixierbar sind, derart, dass jeweils eine punktuelle Befestigung (14, 15) vorgesehen ist, **dadurch gekennzeichnet, dass** ein Befestigungspunkt (14) eines ersten Verkleidungsteils (11, 12) an der Karosserie (10, 13) räumlich benachbart zu einem Befestigungspunkt (15) eines zweiten Verkleidungsteils (16) angeordnet ist, und dass an einem Verbindungselement (17) des ersten Verkleidungsteils (11, 12) eine Erweiterung (30) angeformt ist, die sich in den Bereich des benachbarten Befestigungspunkts (15) des zweiten Verkleidungsteils (16) erstreckt, wobei ein Verbindungselement (28) des zweiten Verkleidungsteils (16) einen Forsatz (32) besitzt, der in die Durchgangsausnehmung (31) der Erweiterung am Verbindungselement des ersten Verkleidungsteils eingreift.

2. Vorrichtung nach Anspruch 1, **dadurch gekennzeichnet, dass** die Erweiterung (30) eine Durchgangsausnehmung (31) für Befestigungsmittel (28, 32, 34) des zweiten Verkleidungsteils (16) aufweist (Fig. 2).

3. Vorrichtung nach Anspruch 1 oder 2, wobei die beiden Verkleidungsteile (11, 12; 16) jeweils über einen als Verbindungselement dienenden Verbindungssteg (17 bzw. 28) an dem zugeordneten Karosserie-Befestigungspunkt (14 bzw. 15) angreifen, **dadurch gekennzeichnet, dass** die Erweiterung (30) des Verbindungsstegs (17) des ersten Verkleidungsteils (11, 12) die Konturen des Verbindungsstegs (28) des zweiten Verkleidungsteils (16) mit umfasst oder im Wesentlichen mit umfasst.

4. Vorrichtung nach Anspruch 1, 2 oder 3, wobei zumindest das erste Verkleidungsteil (12) als Kunststoff-Spritzteil ausgebildet ist und ein einstückig angespritztes Verbindungselement (17) besitzt, **dadurch gekennzeichnet, dass** die Erweiterung (30) an das Verbindungselement (17) des ersten Verkleidungsteils (12) einstückig angespritzt ist.

5. Vorrichtung nach Anspruch 2, 3 oder 4, **dadurch gekennzeichnet, dass** das Verbindungselement (28) des zweiten Verkleidungsteils (16) einen Fortsatz (32) besitzt, der in die Durchgangsausnehmung (31) der Erweiterung (30) am Verbindungselement (17) des ersten Verkleidungsteils (12) eingreift, und dass das Verbindungselement (28) des zweiten Verkleidungsteils (16) ferner eine Langlochbohrung (29) aufweist, die von Befestigungsmitteln (34) durchsetzt ist (Fig. 2).

6. Vorrichtung nach einem oder mehreren der vorstehenden Ansprüche, wobei das erste Verkleidungsteil ein Scheinwerfer (11) ist, der ein Scheinwerfergehäuse (12) aufweist, und wobei das Verbindungselement (17) des Scheinwerfers (11) an das Scheinwerfergehäuse (12) angeformt ist, **dadurch gekennzeichnet, dass** die Erweiterung (30) an das Verbindungselement (17) des Scheinwerfergehäuses (12) einstückig angeformt ist.

## Claims (Claims for the following Contracting State(s): DE, FR, GB)

1. An apparatus for positioning two cover elements, formed by a headlamp (11, 12) and a bumper (16), relative to one another on a body (10) of a vehicle, with the cover parts (11, 12; 16) being fixable as separate parts to the vehicle body structure (13), such that one point-shaped fastening (14, 15) each is provided, with one fastening point (14) of a first cover part (11, 12) being arranged on the body (10, 13) in close spatial proximity to a fastening point (15) of a second cover part (16), and an extension (30) is formed on a connecting element (17) of the first cover part (11, 12), which extension extends in the region of the adjacent fastening point (15) of the second cover part (16), with the extension having a pass-through recess (31) for fastening means (28, 32, 34) of the second cover part (16), with one connecting element (28) of the second cover part (16) having a projection (32) which engages in the pass-through recess (31) of the extension (30) on the connecting element (17) of the first cover part (12), **characterized in that** the connecting element (28) of the second cover part (16) further comprises an elongated bore hole (29) which is penetrated by the fastening means (34).

2. An apparatus according to claim 1, with the two cover parts (11, 12; 16) each acting upon the associated fastening point (14 or 15) via a connecting web (17 or 28) used as a connecting element, **characterized in that** the extension (30) of the connecting web (17) of the first cover part (11, 12) also comprises, or substantially also comprises, the contours of the connecting web (28) of the second cover part (16).

3. An apparatus according to claim 1 or 2, with at least the first cover part (12) being arranged as an injection-molded plastic part and comprising an integral injection-molded connecting element (17), **characterized in that** the extension (30) is injection-molded in an integral manner onto the connecting element (17) of the first cover part (12).

4. An apparatus according to one or several of the preceding claims, with the first cover part being a headlamp (11) comprising a headlamp housing (12), and with the connecting element (17) of the headlamp (12) being formed on the headlamp housing (12), **characterized in that** the extension (30) is integrally formed on the connecting element (17) of the headlamp housing (12).

## Claims (Claims for the following Contracting State(s): AT, BE, BG, CH, CY, CZ, DK, EE, ES, FI, GR, HU, IE, IT, LI, LU, MC, NL, PL, PT, RO, SE, SI, SK, TR)

1. An apparatus for positioning two cover elements, formed by a headlamp (11, 12) and a bumper (16), relative to one another on a body (10) of a vehicle, with the cover parts (11, 12; 16) being fixable as separate parts to the vehicle body structure (13), such that one point-shaped fastening (14, 15) each is provided, **characterized in that** one fastening point (14) of a first cover part (11, 12) is arranged on the body (10, 13) in close spatial proximity to a fastening point (15) of a second cover part (16), and an extension (30) is formed on a connecting element (17) of the first cover part (11, 12), which extension extends in the region of the adjacent fastening point (15) of the second cover part (16), with one connecting element (28) of the second cover part (16) having a projection (32) which engages in the pass-through recess (31) of the extension (30) on the connecting element of the first cover part.

2. An apparatus according to claim 1, **characterized in that** the extension (30) comprises a pass-through recess (31) for fastening means (28, 32, 34) of the second cover part (16) (Fig. 2).

3. An apparatus according to claim 1 or 2, with the two cover parts (11, 12; 16) each acting upon the associated body fastening point (14 or 15) via a connecting web (17 or 28) used as a connecting element, **characterized in that** the extension (30) of the connecting web (17) of the first cover part (11, 12) also comprises, or substantially also comprises, the contours of the connecting web (28) of the second cover part (16).

4. An apparatus according to claim 1, 2 or 3, with at least the first cover part (12) being arranged as an injection-molded plastic part and comprising an integral injection-molded connecting element (17), **characterized in that** the extension (30) is injection-molded in an integral manner onto the connecting element (17) of the first cover part (12).

5. An apparatus according to claim 2, 3 or 4, **characterized in that** the connecting element (28) of the second cover part (16) comprises a projection (32) which engages in the pass-through recess (31) of the extension (30) on the connecting element (17) of the first cover part (12), and the connecting element (28) of the second cover part (16) further comprises an elongated bore hole (29) which is penetrated by the fastening means (34) (Fig. 2).

6. An apparatus according to one or several of the preceding claims, with the first cover part being a headlamp (11) comprising a headlamp housing (12), and with the connecting element (17) of the headlamp (12) being formed on the headlamp housing (12), **characterized in that** the extension (30) is integrally formed on the connecting element (17) of the headlamp housing (12).

## Revendications (Revendications pour l'(les) Etat(s) contractant(s) suivant(s): DE, FR, GB)

1. Dispositif pour le positionnement de deux pièces d'habillage formées par un phare (11, 12) et un pare-chocs (16) l'une par rapport à l'autre sur une carrosserie de véhicule à moteur (10), dans lequel les pièces d'habillage (11, 12 ; 16) peuvent être fixées sous forme de pièces séparées sur la structure de carrosserie du véhicule (13), de telle façon qu'il est prévu pour chacune une fixation ponctuelle (14, 15), un point de fixation (14) d'une première partie d'habillage (11, 12) étant disposé sur la carrosserie (10, 13) à proximité spatiale d'un point de fixation (15) d'une deuxième pièce d'habillage (16), et une partie élargie (30) qui s'étend au niveau du point de fixation voisin (15) de la deuxième pièce d'habillage (16) étant formée sur un élément de liaison (17) de la première pièce d'habillage (11, 12), laquelle partie élargie (30) présente une ouverture traversante (31) pour des moyens de fixation (28, 32, 34) de la deuxième pièce d'habillage (16), un élément de liaison (28) de la deuxième pièce d'habillage (16) possédant une saillie (32) qui se met en prise dans l'ouverture traversante (31) de la partie élargie (30) sur l'élément de liaison (17) de la première pièce d'habillage (12),
**caractérisé en ce que** l'élément de liaison (28) de la deuxième pièce d'habillage (16) présente en outre un trou percé oblong (29) qui est traversé par des moyens de fixation (34).

2. Dispositif selon la revendication 1, dans lequel les deux pièces d'habillage (11, 12 ; 16) se mettent en prise chacune par une barrette de liaison (17 ou 28) servant d'élément de liaison sur le point de fixation sur la carrosserie correspondant (14 ou 15), **caractérisé en ce que** la partie élargie (30) de la barrette de liaison (17) de la première pièce d'habillage (11, 12) inclut les contours de la barrette de liaison (28) de la deuxième pièce d'habillage (16) ou les inclut sensiblement.

3. Dispositif selon la revendication 1 ou 2, dans lequel au moins la première pièce d'habillage (12) est réalisée comme une pièce en plastique moulé par injection et possède un élément de liaison (17) formé par injection d'un seul tenant, **caractérisé en ce que** la partie élargie (30) est formée par injection d'un seul tenant sur l'élément de liaison (17) de la première pièce d'habillage (12).

4. Dispositif selon une ou plusieurs des revendications précédentes, dans lequel la première pièce d'habillage est un phare (11) qui présente un bloc de phare (12), et dans lequel l'élément de liaison (17) du phare (11) est formé d'un seul tenant sur le bloc de phare (12), **caractérisé en ce que** la partie élargie (30) est formée par injection d'un seul tenant sur l'élément de liaison (17) du bloc de phare (12).

## Revendications (Revendications pour l'(les) Etat(s) contractant(s) suivant(s): AT, BE, BG, CH, CY, CZ, DK, EE, ES, FI, GR, HU, IE, IT, LI, LU, MC, NL, PL, PT, RO, SE, SI, SK, TR)

1. Dispositif pour le positionnement de deux pièces d'habillage formées par un phare (11, 12) et un pare-chocs (16) l'une par rapport à l'autre sur une carrosserie de véhicule à moteur (10), dans lequel les pièces d'habillage (11, 12 ; 16) peuvent être fixées sous forme de pièces séparées sur la structure de carrosserie du véhicule (13), de telle façon qu'il est prévu pour chacune une fixation ponctuelle (14, 15), **caractérisé en ce qu'**un point de fixation (14) d'une première pièce d'habillage (11, 12) est disposé sur la carrosserie (10, 13) à proximité spatiale d'un point de fixation (15) d'une deuxième pièce d'habillage (16) et **en ce qu'**il est prévu formée sur un élément de liaison (17) de la première pièce d'habillage (11, 12) une partie élargie (30) qui s'étend au niveau du point de fixation voisin (15) de la deuxième pièce d'habillage (16), un élément de liaison (28) de la deuxième pièce d'habillage (16) possédant une saillie (32) qui se met en prise dans l'ouverture traversante (31) de la partie élargie sur l'élément de liaison de la première pièce d'habillage.

2. Dispositif selon la revendication 1, **caractérisé en ce que** la partie élargie (30) présente une ouverture traversante (31) pour des moyens de fixation (28, 32, 34) de la deuxième pièce d'habillage (16) (Fig. 2).

3. Dispositif selon la revendication 1 ou 2, dans lequel les deux pièces d'habillage (11, 12; 16) se mettent en prise chacune par une barrette de liaison (17 ou 28) servant d'élément de liaison sur le point de fixation sur la carrosserie (14 ou 15) correspondant, **caractérisé en ce que** la partie élargie (30) de la barrette de liaison (17) de la première pièce d'habillage (11, 12) inclut les contours de la barrette de liaison (28) de la deuxième pièce d'habillage (16) ou les inclut sensiblement.

4. Dispositif selon la revendication 1, 2 ou 3, dans lequel au moins la première pièce d'habillage (12) est réalisée comme une pièce en plastique moulé par injection et possède un élément de liaison formé par injection d'un seul tenant (17), **caractérisé en ce que** la partie élargie (30) est formée par injection d'un seul tenant sur l'élément de liaison (17) de la première pièce d'habillage (12).

5. Dispositif selon la revendication 2, 3 ou 4, **caractérisé en ce que** l'élément de liaison (28) de la deuxième pièce d'habillage (16) possède une saillie (32) qui se met en prise dans l'ouverture traversante (31) de la partie élargie (30) sur l'élément de liaison (17) de la première pièce d'habillage (12) et **en ce que** l'élément de liaison (28) de la deuxième pièce d'habillage (16) présente en outre un trou percé oblong (29) qui est traversé par des moyens de fixation (34) (Fig. 2).

6. Dispositif selon une ou plusieurs des revendications précédentes, dans lequel la première pièce d'habillage est un phare (11) qui présente un bloc de phare (12) et dans lequel l'élément de liaison (17) du phare (11) est formé d'un seul tenant sur le bloc de phare (12), **caractérisé en ce que** la partie élargie (30) est formée d'un seul tenant sur l'élément de liaison (17) du bloc de phare (12).
